# EUROPÄISCHE PATENTSCHRIFT

(11) **EP 0 964 830 B1**
(45) Veröffentlichungstag und Bekanntmachung des Hinweises auf die Patenterteilung: **02.07.2003**
(21) Anmeldenummer: 98905136.2
(22) Anmeldetag: 05.03.1998
(51) Int. Cl.: C01B 7/03, C01B 13/18, C01B 7/07

(54) **VERFAHREN ZUR HERSTELLUNG VON ÜBERAZEOTROPER SALZSÄURE AUS METALLCHLORIDLÖSUNGEN**
METHOD FOR PRODUCING HYPERAZEOTROPIC HYDROCHLORIC ACID FROM METAL CHLORIDE SOLUTIONS
PROCEDE POUR PRODUIRE DE L'ACIDE CHLORHYDRIQUE HYPERAZEOTROPIQUE A PARTIR DE SOLUTIONS DE CHLORURES METALLIQUES

(30) Priorität: 05.03.1997 AT 37997
(43) Veröffentlichungstag der Anmeldung: 22.12.1999
(73) Patentinhaber: S.A.D. EDV-Systemanalyse und -Systemdesign Gesellschaft m.b.H., 1060 Wien (AT)
(72) Erfinder: WURMBAUER, Dieter, A-2340 Mödling (AT)
(74) Vertreter: Köhler-Pavlik, Johann, Dipl.-Ing.
(86) Internationale Anmeldenummer: AT9800052
(87) Internationale Veröffentlichungsnummer: WO98039249

(56) Entgegenhaltungen:
- DD-A- 220 583
- US-A- 3 816 599
- US-A- 4 216 196

## Beschreibung

Die vorliegende Erfindung betrifft ein Verfahren zur Herstellung von überazeotroper Salzsäure aus Metallchloridlösungen, wobei die Metallchloridlösungen zuerst unter Bildung eines HCl-hältigen Gasgemisches zersetzt werden, sowie ein Verfahren zur Verarbeitung von Erzen und/oder Metallen unter Verwendung von erfindungsgemäß hergestellter überazeotroper Salzsäure.

Unter dem Begriff "überazeotrope Salzsäure" wird dabei ein Gemisch aus Wasser und Chlorwasserstoff verstanden, dessen Gehalt an Chlorwasserstoff höher ist als beim azeotropen Punkt des Systems Wasser/Chlorwasserstoff bei Normaldruck. Der azeotrope Punkt des Systems bei Normaldruck liegt bei ca. 20 Gew.% HCl.

Das Regenerieren von Salzsäure aus verbrauchten, metallchloridhaltigen Lösungen der Verarbeitung von Erzen und/oder Metallen, z.B. Lösungen aus dem Laugen von Erzen oder verbrauchten Beizlösungen ist aus dem Stand der Technik vielfach bekannt.

Insbesondere bekannt ist das Regenerieren von Salzsäure durch die thermische Zersetzung der metällchloridhaltigen Lösungen z.B. durch eine pyrohydrolytische Behandlung, wobei die Salzsäure gasförmig in den Brüden erhalten wird und als weiteres Produkt das entsprechende Metalloxid gewonnen werden kann.

Die solcherart gewonnenen salzsauren Gase werden zumeist in Wasser absorbiert, wobei Salzsäure erhalten wird. Kennzeichnend für dieses Verfahren des Standes der Technik ist, daß die gewonnene Salzsäure zumeist unterazeotrop ist, d.h. daß der Anteil an Chlorwasserstoff unterhalb des azeotropen Punkts des Systems Wasser/Chlorwasserstoff bei Normaldruck liegt.

Dies liegt daran, daß bei der adiabatischen Adsorption der Salzsäure aus den salzsauren Gasen aufgrund des Chloridgehaltes der Ausgangslösung der azeotrope Punkt nicht übersprungen werden kann.

Typische Anteile an HCl in der nach den Verfahren des Standes der Technik gewonnenen Salzsäure liegen z.B. bei 18 Gew.% bis 20 Gew.%, wenn der Chloridgehalt der Ausgangslösung bei ca. 200 g/l liegt.

Lediglich in Ausnahmefällen, bei denen die Chloridkonzentration in der zu regenerierenden Lösung so hoch ist, daß bereits nach der thermischen Zersetzung in den salzsauren Gasen ein überazeotropes Gemisch vorliegt, kann allein durch Kondensation eine Salzsäure zurückgewonnen werden, deren Anteil an HCl über dem azeotropen Punkt liegt.

Bei einem Chloridgehalt in der Ausgangslösung von 300 g/l kann aus den Röstgasen einer pyrohydrolytischen Behandlung allein durch Kondensation eine Salzsäure mit ca. 26 Gew.% bis 27 Gew.% HCl gewonnen werden.

Es besteht jedoch in letzter Zeit ein verstärktes Bedürfnis zur Herstellung von überazeotroper Salzsäure aus metallchloridhaltigen Lösungen, welche wie im obigen erstgenannten Fall so zusammengesetzt sind, daß bei einer bloßen Absorption der salzsauren Gase nur ein unterazeotropes Gemisch erhalten wird.

Aber auch für den obigen zweitgenannten Fall, bei welchem an sich bereits überazeotrope Gemische erhalten werden, besteht ein Bedürfnis, noch weiter aufkonzentrierte Salzsäure zu erhalten.

Konzentriertere Salzsäure mit einem HCl-Gehalt von beispielsweise 30 Gew.% oder mehr kann nämlich für vielfältigere Zwecke eingesetzt werden als verdünntere Salzsäure. Eine Aufkonzentrierung von Salzsäure mit 26 Gew.% bis 27 Gew.% HCl durch bloßes Abdampfen überschüssigen Wassers ist jedoch nicht möglich.

In der Literatur sind Wege beschrieben, wie man aus einer verdünnten Salzsäure durch die Verschiebung des H₂O-Partialdruckes die HCl-Konzentration über den azeotropen Punkt des Systems HCl/H₂O bringen kann. So kann man sich dabei z.B. eines Schleppmittels bedienen, welches Wasser bindet und so das Verhältnis HCl:H₂O verschiebt. Es ist weiters bekannt, durch die Anwendung unterschiedlicher Drücke überazeotrope Salzsäure zu gewinnen.

Ein diesbezügliches Verfahren ist in Ullmann's Enzyklopädie der Technischen Chemie, 3. Auflage, 1964, Band XV, Seite 79 beschrieben. Dabei wird in einem ersten Turm bei Überdruck hochkonzentriertes Chlorwasserstoffgas ausgetrieben. Das Bodenprodukt (verdünnte Salzsäure) wird in einem zweiten Turm bei vermindertem Druck behandelt, wobei Wasser abgedampft wird und als Bodenprodukt verdünnte Salzsäure mit der für den verminderten Druck des zweiten Turm typischen azeotropen Zusammensetzung gewonnen. Diese verdünnte Salzsäure kann nunmehr wieder dem ersten Turm zugeführt werden.

Um von der mittels der oben aufgeführten bekannten Verfahren erhaltenen unterazeotropen oder relativ niedrig konzentrierten überazeotropen Salzsäure zu konzentrierter überazeotroper Salzsäure zu gelangen, wurde im Stand der Technik bisher vorgeschlagen, die durch die Kondensation bzw. Absorption der gesamten salzsauren Gase erhaltene Salzsäure in einer separaten Anlage aufzukonzentrieren.

Diese separate Aufkonzentrierung erweist sich jedoch als kostenintensiv, so daß man sich öfter dafür entscheidet, anstelle einer Aufkonzentrierung der regenerierten Salzsäure diese zu verwerfen und frische Salzsäure für die jeweiligen Zwecke zu kaufen. Oftmals wird somit eine 18%ige regenerierte Salzsäure nicht weiterverwendet, sondern neutralisiert, was wiederum Umweltprobleme aufgrund der in der Salzsäure gegebenenfalls noch in Spuren enthaltenen Metalle, wie z.B. Chrom oder Nickel verursachen kann.

Die US 4 216 196 A beschreibt ein Verfahren, in welchem aus der Gesamtmenge der aus den salzsauren Gasen kondensierten Salzsäure ein Teilstrom mittels des oben beschriebenen Schleppmittelverfahrens zu hochkonzentriertem HCl-Gas aufkonzentriert und dieses Gas mit dem Hauptstrom des Kondensates wieder vereinigt wird. Als Schleppmittel wird in diesem Fall eine Lösung jenes Metallchlorides herangezogen, welches auch der thermischen Zersetzung zugeführt wird.

Die DD-A-220583 betrifft ebenfalls die Aufkonzentrierung wäßriger subazeotroper Salzsäure. Auch hier wird das gesamte bei bei der thermischen Zersetzung enthaltene Gasgemisch zuerst kondensiert und die derart erhaltene wäßrige subazeotrope Salzsäure anschließend in zwei flüssige Teilströme geteilt. Ein Teilstrom wird extraktiv destilliert und das erhaltene HCl-Gas mit Wasser in einem Absorber dem zweiten, flüssigen Teilstrom zugegeben.

Die vorliegende Erfindung hat die Aufgabe, mittels eines kostengünstigen Verfahrens überazeotrope Salzsäure aus der Regeneration metallchloridhaltiger Lösungen zu gewinnen.

Diese Aufgabe wird erfindungsgemäß dadurch gelöst, daß von dem HCl-hältigen Gasgemisch ein Teilstrom des Gasgemisches in ein überazeotropes HCl-Gasgemisch und Wasser getrennt wird, das so erhaltene überazeotrope HCl-Gasgemisch mit dem gasförmigen Reststrom des HCl-hältigen Gasgemisches wieder vereinigt und zu überazeotroper Salzsäure kondensiert wird.

Für die Zwecke der vorliegenden Erfindung bedeutet dabei der Begriff "Verarbeitung zu einem überazeotropen Gasgemisch" entweder die Auf konzentrierung eines Chlorwasserstoff-Wasser-Gemisches mit unterazeötroper Zusammensetzung zu einem übeazeotropen Gemisch oder die weitere Aufkonzentrierung eines bereits überazeotropen Gemisches. Unter einem "überazeotropen Gasgemisch" wird ein Gemisch verstanden, dessen Konzentration an Chlorwasserstoff so hoch ist, daß nach einer Kondensation des Gemisches Salzsäure mit der gewünschten überazeotropen Zusammensetzung resultiert.

Das erfindungsgemäße Verfahren unterscheidet sich von den Verfahren des Standes der Technik dadurch, daß die durch die thermische Zersetzung der Metallchloride gewonnenen salzsauren Gase vor deren Kondensation zu einem überazeotropen Gasgemisch aufkonzentriert werden, sodaß also nicht wie aus dem Stand der Technik bekannt das gesamte salzsaure Gas kondensiert oder in Wasser absorbiert und danach die entstandene Salzsäure zu überazeotroper Salzsäure verarbeitet bzw. aufkonzentriert werden muß.

Dies hat den Vorteil, daß die aufwendige Aufkonzentrierungsanlage kleiner gehalten werden kann als bei den Verfahren des Standes der Technik. Es zeigt sich auch, daß mit dem erfindungsgemäßen Verfahren der Energieaufwand geringer gehalten werden kann als bei den Verfahren des Standes der Technik.

Durch die erfindungsgemäße Verfahrensführung werden somit in verblüffend einfacher Weise die Probleme des Standes der Technik vermieden und der Fachmann in die Lage versetzt, auf günstige Weise aus metallchloridhaltigen Lösungen auch höher konzentrierte überazeotrope Salzsäure herzustellen.

Das erfindungsgemäße Verfahren ist vorzugsweise dahingehend ausgestaltet, daß die Metallchloridlösung in einem Sprühröstreaktor oder in einem Fließbettreaktor thermisch zersetzt wird. Verfahren dieser Art, z.B. die pyrohydrolytische Zersetzung der metallchoridhaltigen Lösung in das entsprechende Metalloxid und in salzsaure Gase sind an sich aus zahlreichen Dokumenten des Standes der Technik bekannt.

In vorteilhafter Weise wird ein Teilstrom des Gasgemisches kondensiert bzw. in Wasser absorbiert und anschließend in ein überazeotropes HCl-Gasgemisch und Wasser getrennt und das so erhaltene überazeotrope HCl-Gasgemisch mit dem gasförmigen Reststrom des HCl-hältigen Gasgemisches wieder vereinigt, wobei die Menge des Teilstromes und/oder die Konzentration des überazeotropen Gasgemisches derart gewählt wird, daß bei Vereinigung des entstandenen überazeotropen HCl-Gasgemisches mit dem Reststrom das resultierende Gasgemisch die gewünschte überazeotrope Zusammensetzung aufweist.

Es wird somit eine definierte Menge an salzsaurem Gas z.B. durch eine Teilkondensation aus dem Hauptström abgetrennt und dieser Teilstrom mittels der aus dem Stand der Technik bekannten Verfahren zu einem überazeotropen Gasgemisch und Wasserdampf verarbeitet. Das erhaltene überazeotrope Gasgemisch wird mit dem Hauptstrom des salzsauren Gases vereinigt. Durch die geeignete Wahl der Menge des Teilstromes bzw. der Konzentration an Chlorwasserstoff, auf welche der Teilstrom aufkonzentriert wird, läßt sich die gewünschte Konzentration des durch Vereinigung des Teilstromes mit dem Hauptstrom gewonnenen resultierenden Gasgemisches einstellen.

Dies hat insbesondere den Vorteil, daß nur der dem Hauptstrom entzogene Wasseranteil ein zweites Mal verdampft werden muß, weshalb nach dieser bevorzugten Ausführungsform der Energieaufwand noch wesentlich geringer gehalten werden kann.

Das salzsaure Gas bzw. der Teilstrom des salzsauren Gases wird bevorzugt unter Anwendung unterschiedlicher Drücke, wie z.B. weiter oben beschrieben, entwässert.

Vor allem bei Anwendung des Verfahrens mit unterschiedlichen Drücken ("Druckverfahren") eignet sich besonders gut die bevorzugte Ausführungsform, nur einen Teilstrom der salzsauren Gase zu verarbeiten.

Das Druckverfahren erweist sich nämlich bei Durchführung an einem Teilstrom als energetisch günstiger als das alternativ mögliche Schleppmittelverfahren. Weiters bietet das Druckverfahren den Vorteil, daß keine Fremdsubstanzen als Schleppmittel in das Verfahren eingebracht werden. Es ist weiters nicht notwendig, wie im Falle des Schleppmittelverfahrens, die Hilfssubstanz (das Schleppmittel) von HCl-Verunreinigungen zu befreien. Ein weiterer Vorteil der Anwendung des Druckverfahrens besteht darin, daß es im Unterschied zum Schleppmittelverfahren nicht notwendig ist, zusätzliche Substanzen als Schleppmittel zu kaufen. Wenn auf der anderen Seite, wie z.B. in der US 4 216 916 A als Schleppmittel jene Metallchlorzdlösung eingesetzt wird, welche auch thermisch zersetzt wird, ist die Wirksamkeit des Verfahrens stark von der Art der zur Verfügung stehenden Metallchloridlösungen (z.B. Chloride der Metalle Al, Fe, Cr, Ni, Mn, Co) abhängig. Auch dieser Nachteil entfällt bei der Anwendung des Druckverfahrens.

Wird zur Aufkonzentrierung des salzsauren Gases bzw. des Teilstromes das bekannte Schleppmittelverfahren herangezogen, so eignen sich als Schleppmittel z.B. konzentrierte Schwefelsäure oder eine konzentrierte Metallchloridlösung. Die Metallchloridlösung kann aus jener Metallchloridlösung abgezweigt werden, welche thermisch zersetzt wird.

Zur Abtrennung des Teilstromes kann das salzsaure Gas in bekannter Weise an Wasser absorbiert werden.

Bevorzugt weist die erfindungsgemäß gewonnene Salzsäure einen Anteil an Chlorwasserstoff von mehr als 27 Gew.%, vorzugsweise 30 Gew.% bis 36 Gew.%, besonders bevorzugt 32 Gew.% bis 34 Gew.% auf.

Für die Zwecke der vorliegenden Erfindung bedeutet dabei der Begriff "direkt", daß die Verarbeitung der aus den salzsauren Gasen erhaltenen Salzsäure nicht in einer von der Regenerationsanlage getrennten Anlage durchgeführt wird. Die Verarbeitung der Salzsäure ist gemäß dieser vorteilhaften Ausführungsform vielmehr eingebunden in das Verfahren zur thermischen Zersetzung der Metallchloridlösung und zur Kondensation bzw. Absorption der salzsauren Gase, so daß z.B. Energieströme oder Wasser/Wasserdampf aus den Stufen dieser Verfahren auch für die Verarbeitung des Teilstromes herangezogen werden können.

Eine besonders bevorzugte Ausgestaltung des erfindungsgemäßen Verfahrens besteht darin, die erfindungsgemäß gewonnene überazeotrope Salzsäure als Ausgangslösung in einem jener Verfahren einzusetzen, bei welchem die metallchloridhaltigen Lösungen anfallen, aus welchen wiederum die Salzsäure regeneriert wird. Somit kann ein Kreislauf geschlossen werden und der Bedarf an frischer Salzsäure wesentlich reduziert werden.

Für den Betreiber einer Erz- und/oder Metallverarbeitungsanlage, wie z.B. einer Beizanlage ergibt sich somit die attraktive Möglichkeit, aus den verbrauchten Beizlösungen nicht nur wie bisher bekannt Salzsäure zu regenerieren, sondern auch durch die erfindungsgemäße Verarbeitung der regenerierten Salzsäure ein höherkonzentrierteres Produkt zu erhalten, das entweder wieder zu Beginn des Beizprozesse, aber auch zu anderen Zwecken im Rahmen der Erzverarbeitung, z.B. der Laugung eingesetzt werden kann.

Es können somit die Schritte
- der Verarbeitung der Erze und/oder Metalle, z.B. eine Beizeinrichtung und/oder eine Laugungseinrichtung,
- der Gewinnung von salzsauren Gasen aus der verbrauchten Lösung der Verarbeitung der Erze und/oder Metalle,
- der Herstellung von überazeotroper Salzsäure aus den gewönnenen salzsauren Gasen nach dem erfindungsgemäßen Verfahren und
- der Kondensation bzw. Absorption der anfallenden salzsauren Gasgemische
in einer einzigen Anlage vorgesehen werden.

Mit einer solchen Anlage ist es dem Erz- und/oder Metallverarbeiter möglich, die Bedürfnisse des eigenen Betriebes an konzentrierter Salzsäure zumindest teilweise zu decken, aber auch mit der vielseitig verwendbaren erfindungsgemäß gewonnenen überazeotropen Salzsäure eine weitere Einnahmenquelle zu erschließen.

Die Erfindung wird nachstehend durch die Figuren und Ausführungsbeispiele weiter erläutert.

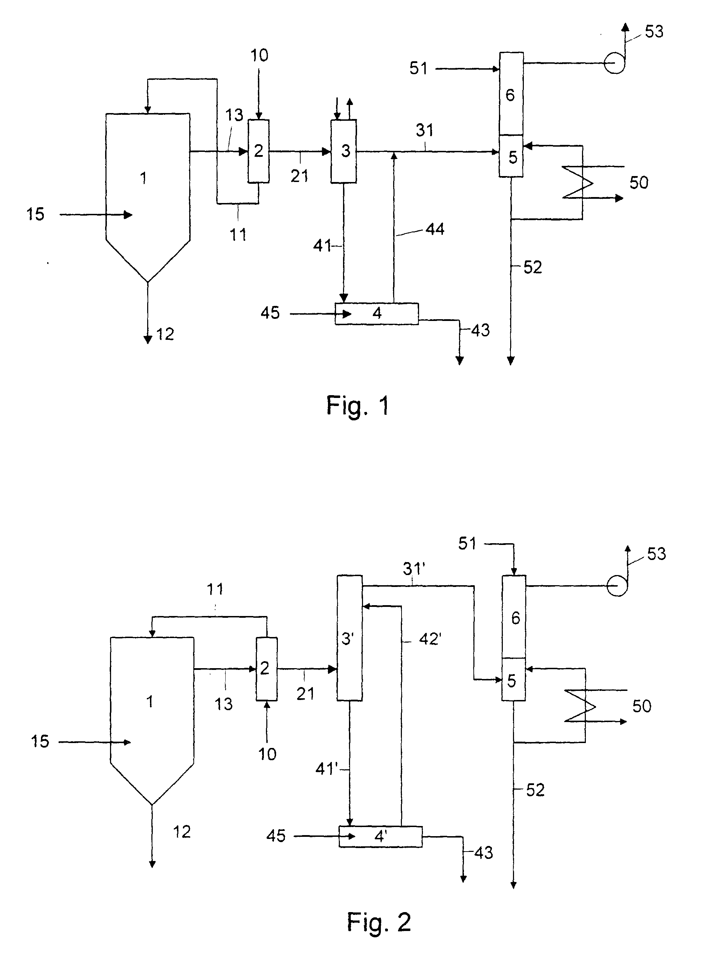

Figur 1 zeigt schematisch eine bevorzugte Ausführungsform des erfindungsgemäßen Verfahrens.

Dabei bedeuten die Bezugsziffern:
- 1: eine Einrichtung zur thermischen Zersetzung von Metallchloridlösungen, z.B. einen Sprühröstreaktor
- 2: eine Einrichtung zur Vorkonzentrierung der Metallchloridlösungen, z.B. ein Rekuperator oder ein Venturiwäscher
- 3: eine Einrichtung zur Abscheidung eines Teilstromes von salzsauren Gasen
- 4: eine Einrichtung zur Verarbeitung des abgeschiedenen Teilstromes zu einem überazeotropen Gasgemisch
- 5: eine Einrichtung zur Kondensation des salzsauren Gases
- 6: eine Einrichtung zur Reinigung des Abgases.

In der Figur 2 bedeuten gleiche Bezugszeichen wie in Figur 1 gleiche Einrichtungen.

Weiters bedeuten in Figur 2:
- 3': eine Einrichtung (z.B. eine Füllkörperkolonne) zur Aufkonzentrierung des salzsauren Gases mittels eines Schleppmittels für Wasser
- 4': eine Einrichtung zur Abtrennung von Wasser aus dem wasserbeladenen Schleppmittel (z.B. eine Vakuumverdampferanlage)

Die Verfahrensführung gemäß Figur 1 wird im folgenden beschrieben:

Eine wäßrige Metallchloridlösung 10 wird in der Einrichtung 2, welche bevorzugt als Rekuperator oder als Venturiwäscher ausgebildet ist, mit Röstgasen 13 aus der Einrichtung 1 aufkonzentriert. Die aufkonzentrierte Metallchloridlösung 11 wird in die Einrichtung 1, welche bevorzugt ein Sprühröstreaktor ist, eingebracht. Mit 15 ist die Energiezufuhr in die Einrichtung 1 angedeutet.

Am Boden der Einrichtung 1 werden die durch die thermischen Zersetzung gewonnenen Oxide 12 abgezogen.

Die aus der Einrichtung 2 austretenden salzsauren Gase 21 werden zum Teil kondensiert. Der absorbierte Teilstrom 41 wird in die Einrichtung 4 übergeführt und unter Energiezufuhr 45 in einem ersten Turm unter erhöhtem Druck wie oben beschrieben zu hochkonzentriertem HCl-Gas 44 aufkonzentriert.
In einem zweiten Turm der Einrichtung 4 wird unter vermindertem Druck aus der verbleibenden verdünnten Salzsäure Wasser abgedampft. Der abgetrennte Wasserdampf 43 wird mit dem Abgas 53 der salzsauren Gase abgeleitet. Die im zweiten Turm aufkonzentrierte Salzsäure wird wieder dem ersten Turm zugeführt.

Der Strom von hochkonzentriertem HCl-Gas 44 wird mit dem Hauptstrom der salzsauren Gase 31 vereinigt und in der Einrichtung 5 unter Kühlung 50 zu flüssiger überazeotroper Salzsäure 52 kondensiert. Die restlichen Inertgase werden in einer Kolonne 6 vom restlichen HCl-Anteil gereinigt und als Abgas 53 mit entsprechendem Wasseranteil abgeführt.

Die Verfahrensführung der bevorzugten Ausführungsform gemäß Figur 2 entspricht in bezug auf die Einrichtungen 1, 2, 5 und 6 der Verfahrensführung gemäß Figur 1.

Im Unterschied zu Figur 1 wird in der Verfahrensführung gemäß Figur 2 dem Hauptstrom an salzsauren Gasen in der Einrichtung 3' mit einem der Einrichtung 3' zugeführten Strom 42' an Schleppmittel in bekannter Weise Wasser entzogen.

Aus der Einrichtung 3' wird das mit Wasser beladene Schleppmittel 41' abgezogen, in der Einrichtung 4' von überschüssigem Wasser befreit und wieder im Kreislauf zur Einrichtung 3' geführt.

Bei dieser Verfahrensführung entsteht nur ein Hauptstrom 31' an überazeotroper Salzsäure, der wie bei Figur 1 beschrieben kondensiert wird.

### Ausführungsbeispiele:

### Beispiel 1 (Druckverfahren):

In einer Beizanlage eines Stahlwerkes werden für ein spezielles Beizprogramm stündlich 3 m³ käuflicher 33%iger Salzsäure eingesetzt. Diese Säure wird nun nach ihrem Gebrauch wieder zu einer einsatzfähigen 33%igen Salzsäure regeneriert.

Da die Säure nicht vollständig verbraucht werden kann, weil für den Beizvorgang immer ein bestimmter Gehalt an freier Salzsäure vorhanden sein muß, hat die zur Regeneration eingesetzte Lösung folgende Zusammensetzung:
330 g/l Metallchloride (größtenteils FeCl₂)
180 g/l freie Salzsäure
820 g/l Wasser

Diese Lösung wird wie in Figur 1 beschrieben einer Regenerationsanlage zugeführt, in der die Lösung verdampft und die Metallchloride thermisch in Metalloxide und HCl-Gas zersetzt werden. Das erhaltene Röstgas hat die folgende Zusammensetzung:
1110 kg HCl
3002 kg H₂O
2930 Nm³ N₂+O₂+CO₂

Aus diesem Röstgas wird nun nicht, wie im Stand der Technik üblich, die Salzsäure in einer Absorptionskolonne zurückgewonnen, sondern nur soviel Säure kondensiert, daß der Wassergehalt der kondensierten Säure jener Menge Wasser entspricht, die aus dem System entfernt werden muß. Bei dieser Teilkondensation entsteht ca. 20%ige Salzsäure.

Im vorliegenden Fall müssen 752 kg H₂O zur Erzielung einer 33%igen Salzsäure abgezogen werden, das entspricht einer zu kondensierenden Menge von 858 l der ca.20%igen Salzsäure.

Dieser Teilstrom von 858 l 20%iger Salzsäure wird nach dem oben beschriebenen Druckverfahren durch Anwendung unterschiedlicher Drücke in 98%iges HCl-Gas und Wasserdampf zerlegt, wobei der Wasserdampf (752 kg) mit dem Abgas des Röstgases abgeleitet wird und das HCl-Gas (188 kg) wieder dem restlichen Röstgas zugeführt werden.

Aus dem vereinigten Röstgasstrom, in dem nun das für die Kondensation erforderliche HCl-H₂O-Verhältnis vorliegt, fallen durch Kühlung in einem Kondensator mit aufgesetzter Bodenkolonne zur Reinigung des restlichen Inertgases 3360 kg einer 33%igen Salzsäure an.
Auf diese Weise mußten lediglich 752 kg Wasser abgedampft werden, wodurch der Energieaufwand gegenüber einer separaten Konzentrierungsanlage zur Herstellung von 33%iger Salzsäure beträchtlich verringert werden konnte.

### Beispiel 2 (Verfahren mit Schleppmittel):

Eine Metallchloridlösung gemäß Beispiel 1 wurde wie in Beispiel 1 beschrieben regeneriert, wobei ein salzsaures Röstgas der gleichen Zusammensetzung wie in Beispiel 1 anfiel.

Diesem Röstgas wird in einer Füllkörperkolonne durch Aufgabe von konzentrierter Calciumchloridlösung Wasser entzogen. Die mit Wasser verdünnte CaCl₂-Lösung (3193 l) wird in einer Vakuum-Verdampferanlage wieder zu konzentrierter CaCl₂-Lösung (2490 l, 48%ig) aufkonzentriert, wobei das überschüssige Wasser (752 kg) als Wasserdampf abgeführt wird. Die aufkonzentrierte 48%ige CaCl₂-Lösung geht wieder zurück in die Kolonne zum Entwässern des Röstgases.

Das aus der Entwässerung kommende Röstgas hat nun die gewünschte Zusammensetzung und das erforderliche HCl-H₂O-Verhältnis, so daß durch Kühlung in einem Kondensator mit aufgesetzter Bodenkolonne wie im Beispiel 1 3360 kg einer 33%igen Salzsäure anfallen.

Der Energieverbrauch liegt im Beispiel 1 etwas günstiger als im Beispiel 2, obwohl die gleiche Menge Wasser aus dem System entfernt werden muß. Das liegt daran, daß der Wirkungsgrad der Apparate zur Trennung des HCl-Wasser-Gemisches bzw. zur Aufkonzentrierung der verdünnten CaCl₂-Lösung unterschiedlich ist. Weiters muß bei Anwendung des Druckverfahrens keine Trennung von restlichem Chlorwasserstoff aus dem Schleppmittel erfolgen.

## Patentansprüche

1. Verfahren zur Herstellung von überazeotroper Salzsäure aus Metallchloridlösungen, z.B. verbrauchter Beizlösung, wobei die Metallchloridlösungen zuerst unter Bildung eines HCl-hältigen Gasgemisches thermisch zersetzt werden, **dadurch gekennzeichnet, daß** von dem HCl-hältigen Gasgemisch ein Teilstrom des Gasgemisches in ein überazeotropes HCl-Gasgemisch und Wasser getrennt wird, das so erhaltene überazeotrope HCl-Gasgemisch mit dem gasförmigen Reststrom des HCl-hältigen Gasgemisches wieder vereinigt und zu überazeotroper Salzsäure kondensiert wird.

2. Verfahren nach Anspruch 1, **dadurch gekennzeichnet, daß** die Metallchloridlösung in einem Sprühröstreaktor oder in einem Fließbettreaktor thermisch zersetzt wird.

3. Verfahren nach Anspruch 1 oder 2, **dadurch gekennzeichnet, daß** der Teilstrom des Gasgemisches kondensiert bzw. in Wasser absorbiert und anschließend in ein überazeotropes HCl-Gasgemisch und Wasser getrennt und das so erhaltene überazeotrope HCl-Gasgemisch mit dem gasförmigen Reststrom des HCl-hältigen Gasgemisches wieder vereinigt wird, wobei die Menge des Teilstroms und/oder die Konzentration des überazeotropen HCl-Gasgemisches derart gewählt werden, daß bei Vereinigung des entstandenen überazeotropen HCl-Gasgemisches mit dem Reststrom das resultierende Gasgemisch die gewünschte überäzeotrope Zusammensetzung aufweist.

4. Verfahren nach Anspruch 1 oder 2 **dadurch gekennzeichnet, daß** der Teilstrom des Gasgemisches unter Anwendung unterschiedlicher Drücke zu einem überazeotropen HCl-Gasgemisch entwässert und das so erhaltene überazeotrope HCl-Gasgemisch mit dem gasförmigen Reststrom des HCl-hältigen Gasgemisches wieder vereinigt wird, wobei die Menge des Teilstromes des Gasgemisches und/oder die Konzentration des überazeotropen HCl-Gasgemisches derart gewählt werden, daß bei Vereinigung des entstandenen überazeotropen HCl-Gasgemisches mit einem gasförmigen Reststrom das resultierende Gasgemisch die gewünschte überazeotrope Zusammensetzung aufweist.

5. Verfahren nach einem der Ansprüche 1 bis 4, **dadurch gekennzeichnet, daß** die gewonnene überazeotrope Salzsäure einen HCl-Anteil von mehr als 27 %-Masse, vorzugsweise 30 bis 36 %-Masse, besonders bevorzugt 32 bis 34 %-Masse aufweist.

6. Verfahren zur Verarbeitung von Erzen und/oder Metallen, z.B. zum Beizen von Stählen, insbesondere Edelstählen und/oder zur Laugung von Erzen mittels salzsaurer Lösungen, **dadurch gekennzeichnet, daß** zumindest ein Teil der eingesetzten salzsauren Lösungen aus überazeotroper Salzsäure stammt, welche aus den verbrauchten Lösungen der Verarbeitung der Erze und/oder Metalle nach einem Verfahren gemäß einem der Ansprüche 1 bis 5 hergestellt wurde.

## Claims

1. A process for the preparation of superazeotropic hydrochloric acid from metal chloride solutions, e.g. spent pickling solutions, wherein the metal chloride solutions at first are thermally decomposed under formation of a HCl-containing gas mixture, **characterised in that** from the HCl-containing gas mixture a partial stream of the gas mixture is separated into a superazeotropic HCl gas mixture and water, the resulting superazeotropic HCl gas mixture is recombined with the gaseous residual stream of the HCl-containing gas mixture and condensed to yield a superazeotropic hydrochloric acid.

2. A process according to claim 1, **characterised in that** the metal chloride solution is thermally decomposed in a spray roasting reactor or in a fluidised bed reactor.

3. A process according to claim 1 or 2, **characterised in that** the partial stream of the gas mixture is condensed or absorbed in water, respectively, and subsequently separated into a superazeotropic HCl gas mixture and water, and the resulting superazeotropic HCl gas mixture is recombined with the gaseous residual stream of the HCl containing gas mixture, the volume of the partial stream and/or the concentration of the superazeotropic HCl gas mixture being selected such that following the recombination of the thus formed superazeotropic HCl gas mixture with the residual stream, the resulting gas mixture exhibits the desired superazeotropic composition.

4. A process according to claim 1 or 2, **characterised in that** the partial stream of the gas mixture is dehydrated by applying different pressures to a superazeotropic HCl gas mixture and the resulting superazeotropic HCl gas mixture is recombined with the gaseous residual stream of the HCl-containing gas mixture, wherein the volume of the partial stream of the gas mixture and/or the concentration of the superazeotropic HCl gas mixture are selected such that following recombination of the thus formed superazeotropic HCl gas mixture with the gaseous residual stream, the resulting gas mixture has the desired superazeotropic composition.

5. A process according to any one of claims 1 to 4, **characterised in that** the recovered superazeotropic hydrochloric acid has a HCl content of more than 27 % by weight, preferably 30 to 36 % by weight, particularly preferably 32 to 34 % by weight.

6. A process for ore and/or metal processing, e.g. for pickling of steels, in particular special steels and/or for ore leaching by means of hydrochloric solutions, **characterised in that** at least a portion of the hydrochloric solutions used originates from superazeotropic hydrochloric acid having been prepared from the spent solutions from ore and/or metal processing in accordance with a process according to any one of claims 1 to 5.

## Revendications

1. Procédé pour la préparation d'acide chlorhydrique surazéotrope à partir de solutions de chlorures métalliques, par exemple d'une solution de décapage usée, les solutions de chlorures métalliques étant dans un premier temps thermiquement décomposées avec la formation d'un mélange gazeux contenant HCI, **caractérisé en ce que** l'on sépare à partir du mélange gazeux contenant HCl un courant partiel du mélange gazeux en un mélange gazeux de HCI surazéotrope et en eau, le mélange gazeux de HCl surazéotrope ainsi obtenu est à nouveau réuni avec le courant résiduel gazeux du mélange gazeux contenant HCI et est condensé en acide chlorhydrique surazéotrope.

2. Procédé selon la revendication 1, **caractérisé en ce que** la solution de chlorures métalliques est thermiquement dissociée dans un réacteur de grillage à pulvérisation ou dans un réacteur à lit fluidisé.

3. Procédé selon la revendication 1 ou 2, **caractérisé en ce que** le courant partiel du mélange gazeux est condensé respectivement absorbé dans de l'eau et finalement séparé en un mélange gazeux de HCI surazéotrope et en eau et le mélange gazeux de HCI surazéotrope ainsi obtenu est à nouveau réuni avec le courant résiduel gazeux du mélange gazeux contenant HCl, la quantité du courant partiel et/ou la concentration du mélange gazeux de HCI surazéotrope étant choisie de telle sorte que le mélange gazeux résultant de la réunification du mélange gazeux de HCI surazéotrope produit avec le courant résiduel présente la composition surazéotrope souhaitée.

4. Procédé selon la revendication 1 ou 2, **caractérisé en ce que** le courant partiel du mélange gazeux est déshydraté avec l'application de pressions différentes en un mélange gazeux de HCl surazéotrope et le mélange gazeux de HCI surazéotrope ainsi obtenu est à nouveau réuni avec le courant partiel gazeux du mélange gazeux contenant HCI, la quantité du courant résiduel du mélange gazeux et/ou la concentration du mélange gazeux de HCl surazéotrope étant choisie de telle sorte que le mélange gazeux résultant de la réunification du mélange gazeux de HCI surazéotrope produit avec un courant résiduel gazeux présente la composition surazéotrope souhaitée.

5. Procédé selon l'une quelconque des revendications 1 à 4, **caractérisé en ce que** l'acide chlorhydrique surazéotrope récupéré présente une part en HCI supérieure à 27 % en masse, de préférence de 30 à 36 % en masse, encore mieux de 32 à 34 % en masse.

6. Procédé pour le traitement de minerais et/ou de métaux, par exemple pour le décapage d'aciers, en particulier d'aciers inoxydables et/ou pour le lessivage de minerais au moyen de solutions chlorhydriques, **caractérisé en ce qu'**au moins une partie des solutions chlorhydriques utilisées provient d'acide chlorhydrique surazéotrope, lequel a été préparé à partir des solutions usées du traitement des minerais et/ou des métaux selon un procédé selon l'une quelconque des revendications 1 à 5.
